# EUROPEAN PATENT APPLICATION

(11) **EP 2 500 084 A1**
(43) Date of publication of application: **19.09.2012**
(21) Application number: 10829738.3
(22) Date of filing: 22.06.2010
(51) Int. Cl.: B01D 63/14, B01D 63/00, B01D 69/12, B01D 71/56

(54) **SEPARATION MEMBRANE UNIT AND SEPARATION MEMBRANE ELEMENT WITH SAME**

(30) Priority: 11.11.2009 JP 2009258334
(71) Applicant: Nitto Denko Corporation, Ibaraki-shi, Osaka 567-8680 (JP)
(72) Inventor: ISHII,Katsumi, Ibaraki-shi Osaka 567-8680 (JP); HIRO,Atsushi, Ibaraki-shi Osaka 567-8680 (JP); KAWAGUCHI,Yoshihide, Ibaraki-shi Osaka 567-8680 (JP); HARADA,Noriaki, Ibaraki-shi Osaka 567-8680 (JP); HAYASHI,Osamu, Ibaraki-shi Osaka 567-8680 (JP); MIZUIKE,Atsuko, Ibaraki-shi Osaka 567-8680 (JP)
(74) Representative: Sajda, Wolf E.
(86) International application number: PCT/JP2010/060536
(87) International publication number: WO 2011/058778

(57) **Abstract**

A separation membrane unit is provided with two separation membranes (1) which each have a separation active layer (4) formed on one surface of a sheet-like porous base material (3) and which are superposed on each other so that the separation active layers (4) face each other. The two separation membranes (1) are folded multiple times into pleats, and as a result, folds (5) are formed alternately on one side and the other side (top side and bottom side in Fig. 4A) of the two separation membranes (1), As a result of the two separation membranes (1) being superposed on each other so that the separation active layers (4) face each other, the separation active layers (4) are not exposed, and the simple configuration can prevent the separation active layers (4) from being damaged.

## Description

### TECHNICAL FIELD

The present invention relates to a separation membrane unit wherein a feed is filtrated to generate a permeate, and a separation membrane element provided with this unit.

### BACKGROUND ART

As manners of filtrating feed water (feed), such as waste water or seawater, by use of a reverse osmosis process or some other process, the total filtration manner and the cross flow filtration manner are generally known. The total filtration manner is a manner of filtrating the total amount of supplied water. For example, the feed water is supplied to a separation membrane in a direction perpendicular to the membrane.
The cross flow filtering manner is a manner of supplying feed water to a separation membrane in a direction parallel to the membrane, filtrating a portion of the feed water through the separation membrane, and optionally circulating the feed water simultaneously with the filtration, thereby making it possible to filtrate the feed water while the clogging of the separation membrane is retrained.

As an example of a separation membrane unit usable when feed water is filtrated by the cross flow filtrating method, known is a separation membrane unit having a separation membrane folded a plurality of times into the form of pleats in such a manner that folds are formed to be arranged alternately at one side face and an opposite side face of the unit, as disclosed in Patent Document 1 listed up below.
According to the structure disclosed in Patent Document 1, the separation membrane, which is a single membrane, is folded a plurality of times into the form of pleats, and between regions of the separation membrane that are made adjacent to each other by the folding, a channel member (net-like spacer) for making a channel is arranged.

In the separation membrane, a separation active layer (skin layer) is formed on, for example, one surface of a sheet-form porous substrate. Feed water is supplied to this separation active layer side to be passed through the separation active layer and the porous substrate, whereby permeated water can be obtained.

### PRIOR ART DOCUMENTS

### Patent Documents

Patent Document 1: JP-A-S54-17378

### SUMMARY OF THE INVENTION

### PROBLEMS TO BE SOLVED BY THE INVENTION

When a separation membrane wherein a separation active layer is formed on one surface of a porous substrate is folded a plurality of times into the form of pleats as described above, the separation active layer comes to be exposed to either one side face or the opposite side face at which folds are formed. Thus, when the separation membrane unit is handled, the separation active layer may be damaged.
According to Patent Document 1, the outside of the separation membrane folded into a pleat form is covered with a protecting layer (plastic film), so that the separation active layer can be prevented from being damaged. However, this technique has a problem that the layout of this protecting layer makes the structure complicated so that costs for the production increase.

Moreover, when a separation membrane wherein a separation active layer is formed only on one of the two surfaces of a porous substrate is folded a plurality of times into the form of pleats as described above, the separation membrane unit has an asymmetric structure. In this case, a bias current is easily caused, so that the unit may not satisfactorily attain filtration in the cross flow filtration manner.

In light of the situation, the present invention has been made. An object thereof is to provide a separation membrane unit which has a simple structure and can prevent its separation active layer from being damaged, and a separation membrane element having this unit, Another object of the invention is to provide a separation membrane unit which can satisfactorily attain filtration in the cross flow filtration manner, and a separation membrane element having this unit.

### MEANS FOR SOLVING THE PROBLEMS

A separation membrane unit of the present invention is a separation membrane unit for filtrating a feed to generate a permeate, and comprises two separation membranes each having a separation active layer formed on one surface of a porous substrate in a sheet form, the two separation membranes being superposed over each other while the separation active layers face each other, wherein the two separation membranes are folded a plurality of times into the form of pleats, whereby folds are formed alternately at one side face and an opposite side face.

According to this structure, the two separation membranes, in each of which the separation active layer is formed on the one surface of the sheet-form porous substrate, are superposed over each other while the separation active layers face each other; thus, the separation active layers are not exposed to the one side face nor the opposite side face where the folds are formed. Thus, according to this simple structure, the separation active layers can be prevented from being damaged.

Moreover, the two separation membranes, which are superposed over each other, while the separation active layers face each other, have a symmetric structure. Although the two separation membranes are in the state of being folded a plurality of times into the pleat form, the two separation membranes have this symmetric structure.
Accordingly, as compared with an asymmetric structure wherein a single separation membrane having a surface on which a separation active layer is formed is folded a plurality of times into the form of pleats, a bias current is less caused so that the feed can be more satisfactorily filtrated in the cross flow filtration manner.

The separation membrane unit of the present invention is characterized in that between the two separation membranes a supply side channel is made as a channel for supplying the feed.

According to this structure, by supplying the feed into the supply side channel made between the two separation membranes, the feed can be filtrated through the two separation membranes to produce the permeate outside the two separation membranes.

The separation membrane unit of the present invention is characterized by comprising a supply side channel member for making the supply side channel, the supply side channel member being arranged between the two separation membranes.

According to this structure, the supply side channel can be certainly made by means of the supply side channel member laid between the two separation membranes. Thus, the feed can be satisfactorily filtrated at the folds and others also.

The separation membrane unit of the present invention is characterized in that a permeate side channel is made as a channel for the permeate at each of the one side face and the opposite side face of the two separation membranes.

According to this structure, the permeate produced by the filtration of the feed through the two separation membranes can be efficiently transported through the permeate side channel formed at each of the one side face and the opposite side face of the two separation membranes.
In the case of symmetrically arranging, for the two separation membranes folded particularly to give a symmetric structure, the permeate side channels at the one side face and the opposite side face thereof, the separation membrane unit has a symmetric structure as a whole. As a result, the feed can be more stably filtrated.
In a case where the separation membrane unit is held inside, for example, an exterior member having a cylindrical cross section, or in other cases, the permeate side channel can be laid in a space which is made at each of the one side face and the opposite side face of the two separation membranes, and which is positioned between each of these side faces and the internal circumferential surface of the exterior member. Therefore, spaces where the two separation membranes are to be set can be certainly gained at a maximum level. Thus, the feed can be more efficiently filtrated.

The separation membrane unit of the present invention is preferable in the case where the separation active layer comprises a polyamide type resin.

A separation membrane element of the present invention is characterized by comprising the above separation membrane unit and an exterior member that covers an outside of the separation membrane unit.

### BRIEF DESCRIPTION OF THE DRAWINGS

- Fig. 1: is an exploded sectional view illustrating an example of a stack embodiment of separation membranes which constitute a separation membrane unit according to an embodiment of the invention.
- Fig. 2: is a schematic perspective view illustrating a structural example of a separation membrane unit.
- Fig. 3A: is a schematic sectional view illustrating an embodiment wherein separation membranes are folded.
- Fig. 3B: is a schematic sectional view illustrating an embodiment wherein separation membranes are folded.
- Fig. 3C: is a schematic sectional view illustrating an embodiment wherein separation membranes are folded.
- Fig. 4A: is a schematic perspective view illustrating a structural example of a separation membrane element.
- Fig. 4B: is a schematic perspective view illustrating a structural example of the separation membrane element.
- Fig. 4C: is a schematic perspective view illustrating a structural example of the separation membrane element.

### EMBODIMENTS FOR CARRYING OUT THE INVENTION

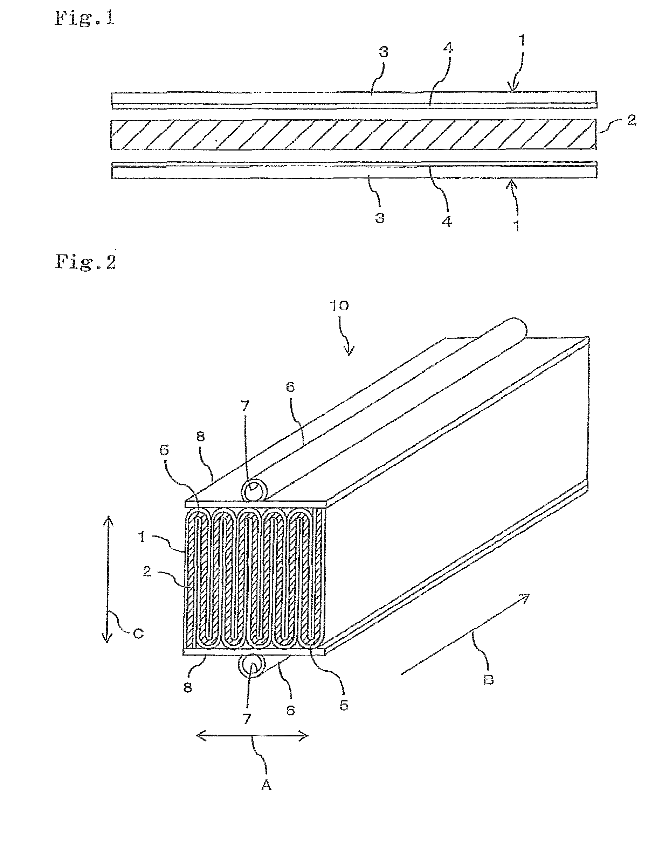

Fig. 1 is an exploded sectional view illustrating an example of a stack embodiment of separation membranes 1 which constitute a separation membrane unit according to an embodiment of the invention. In this example, a channel member 2 as a spacer is sandwiched between the separation membranes 1, the number of which is two. The separation membranes 1 may each be any one of an ultrafiltration membrane, a nano-filtration membrane, a reverse osmotic membrane, a dialysis membrane, and others.
It is effective that the membranes 1 are each a reverse osmotic membrane, or an ultrafiltration membrane in light of a relationship between the pressure of feed water, and the flow rate of permeated water or some other factor.

The two separation membranes 1 have structures identical with each other, and each of the membranes 1 has a sheet-form porous substrate 3, and a separation active layer (skin layer) 4 formed on one of the two surfaces of the porous substrate 3. The separation membrane 1 may contain not only the porous substrate 3 and the separation active layer 4 but also some other layer. These two separation membranes 1 are superposed onto both sides of the channel member 2, respectively, to sandwich the member 2 therebetween in such a manner that their separation active layers 4 face each other. In this manner, the two separation membranes 1 and the channel member 2 are stacked onto each other in the state that the separation active layers 4 of the separation membranes 1 contact opposed surfaces of the channel member 2, respectively.

The porous substrates 3 may each be made of, for example, polysulfone, polyethersulfone, PVDF, polyethylene, polyamide, or epoxy. The porous substrate 3 may have a structure reinforced with a reinforcing material, such as nonwoven fabric, woven fabric, knitting or a net, used together with such a material. The thickness of the porous substrate 3 is from about 20 µm to 1000 µm.
The separation active layers 4 are each a dense and nonporous thin film, and the forming material thereof is not particularly limited. Examples thereof include cellulose acetate, ethylcellulose, polyether, polyester, polyamide, and silicon. The channel member 2 may be made of, for example, knitting or a net.

In the invention, the separation active layers 4 are each preferably a separation active layer 4 containing a polyamide type resin obtained by polymerizing a polyfunctional amine component and a polyfunctional acid halide component.

The polyfunctional amine component is a polyfunctional amine having two or more reactive amine groups, and examples thereof include aromatic, aliphatic and alicyclic polyfunctional amines.

Examples of the aromatic polyfunctional amine include m-phenylenediamine, p-phenylenediamine, o-phenylenediamine, 1,3,5-triaminobenzene, 1,2,4-triaminobenzene, 3,5-diaminobenzoic acid, 2,4-diaminotoluene, 2,6-diaminotoluene N,'N'-dimethyl-m-phenylenediamine, 2,4-diaminoanisole, amidol, and xylylenediamine.

Examples of the aliphatic polyfunctional amine include ethylenediamine, propylenediamine, tris(2-aminoethyl)amine, and n-phenyl-ethylenediamine.

Examples of the alicyclic polyfunctional amine include 1,3-diaminocyclohexane, 1,2-diaminocyclohexane, 1,4-diaminocyclohexane, piperazine, 2,5-dimethylpiperazine, and 4-aminomethylpiperazine.

These polyfunctional amines may be used alone or in a combination of two or more thereof. In order to yield the separation active layers 4 that have a high salt-rejection performance, it is preferred to use an aromatic polyfunctional amine.

The polyfunctional acid halide component is a polyfunctional acid halide having two or more reactive carbonyl groups.

Examples of the polyfunctional acid halide include aromatic, aliphatic, and alicyclic polyfunctional acid halides.

Examples of the aromatic polyfunctional acid halide include trimesic acid trichloride, terephthalic acid dichloride, isophthalic acid dichloride, biphenyldicarboxylic acid dichloride, naphthalenedicarboxylic acid dichloride, benzenetrisulfonic acid trichloride, benzenedisulfonic acid dichloride, and chlorosulfonylbenzenedicarboxylic acid dichloride.

Examples of the aliphatic polyfunctional acid halide include propanedicarboxylic acid dichloride, butanedicarboxylic acid dichloride, pentanedicarboxylic acid dichloride, propanetricarboxylic acid trichloride, butanetricarboxylic acid trichloride, pentanetricarboxylic acid trichloride, any glutaryl halide, and any adipoyl halide.

Examples of the alicyclic polyfunctional acid halide include cyclopropanetricarboxylic acid trichloride, cyclobutanetetracarboxylic acid tetrachloride, cyclopentanetricarboxylic acid trichloride, cyclopentanetetracarboxylic acid tetrachloride, cyclohexanetricarboxylic acid trichloride, tetrahydrofurantetracarboxylic acid tetrachloride, cyclopentanedicarboxylic acid dichloride, cyclobutanedicarboxylic acid dichloride, cyclohexanedicarboxylic acid dichloride, and tetrahydrofurandicarboxylic acid dichloride.

These polyfunctional acid halides may be used alone or in a combination of two or more thereof. In order to yield the separation active layers 4 that have a high salt-rejection performance, it is preferred to use an aromatic polyfunctional acid halide.
It is also preferred to use a plurality of polyfunctional acid halide components, and use, as at least one of the components, a trivalent or higher-multivalent polyfunctional acid halide to form a crosslinked structure.

In order to improve performances of the separation active layers 4 that contain a polyamide type resin, it is allowable to copolymerize therewith, for example, a polymer such as polyvinyl alcohol, polyvinyl pyrrolidone or polyacrylic acid, or a polyhydric alcohol such as sorbitol or glycerin.

The method for forming the polyamide-type-resin-containing separation active layers 4 onto the respective surfaces of the porous substrates 3 is not particularly limited, and may be any known method. Examples thereof include an interfacial condensation method, a phase separation method, and a thin-film painting method.
The interfacial condensation method is specifically a method of bringing an aqueous amine solution containing a polyfunctional amine component into contact with an organic solution containing a polyfunctional acid halide component to cause interfacial polymerization, thereby forming the separation active layers 4, and then putting the separation active layers 4 onto the porous substrates 3, respectively, or a method of causing the interfacial polymerization on the porous substrates 3, thereby forming the separation active layers 4 of a polyamide type resin directly onto the porous substrates 3, respectively.
Details of conditions for the interfacial condensation method, and others are described in JP-A-S58(or 1983)-24303, JP-A-H1(or 1989)-180208, and others. These known techniques may be appropriately adopted.

In the invention, preferred is the method of forming aqueous solution coated layers made of an aqueous amine solution containing a polyfunctional amine component onto the porous substrates 3, respectively, and next bringing the aqueous solution coated layers into contact with an organic solution containing a polyfunctional acid halide component to cause interfacial polymerization, thereby forming the separation active layers 4.

In the interfacial polymerization method, the concentration of the polyfunctional amine component in the aqueous amine solution is not particularly limited, and is preferably from 0.1 to 5 % by weight, more preferably from 1 to 4 % by weight. If the concentration of the polyfunctional amine component is too low, defects such as pinholes are easily generated in the separation active layers 4, and further the layers 4 tend to be easily deteriorated in salt-rejection performance.
On the other hand, if the concentration of the polyfunctional amine component is too high, the separation active layers become too large in film thickness to turn large in resistance against permeate, so that the present separation membrane unit tends to be declined in permeate flux.

The concentration of the polyfunctional acid halide component in the organic solution is not particularly limited, and is preferably from 17.01 to 5 % by weight, more preferably from 0.05 to 3 % by weight. If the concentration of the polyfunctional acid halide component is too low, an unreacted fragment of the polyfunctional amine component remains easily or defects such as pinholes are easily generated in the separation active layers 4, so that the layers 4 tend to be easily deteriorated in salt refection performance.
On the other hand, if the concentration of the polyfunctional acid halide component is too high, an unreacted fragment of the polyfunctional acid halide component remains easily or the separation active layers become too large in film thickness to turn large in resistance against permeate, so that the present separation membrane unit tends to be declined in permeate flux.

In the above-mentioned organic solution, the used organic solvent is not particularly limited as far as the solvent is a solvent which is low in solubility in water, does not deteriorate the porous substrates 3, and dissolves the polyfunctional acid halide component.
Examples thereof include saturated hydrocarbons, such as cyclohexane, heptane, octane, and nonane ; and halogen-substituted hydrocarbons, such as 1,1,2-trichlorotrifluoroethane. The organic solvent is preferably a saturated hydrocarbon having a boiling point of 300 °C or lower, and is more preferably one having a boiling point of 200 °C or lower.

Various additives may be added to the aqueous amine solution or the organic solution to make the formation of the films easy or improve the resultant composite semipermeable membranes in performance. Examples of the additives include surfactants such as sodium dodecylbenzenesulfonate, sodium dodecylsulfate and sodium laurylsulfate, sodium hydroxide, which removes halogenated hydrogen generated by the polymerization, basic compounds such as trisodium phosphate and triethylamine, an acylated catalyst, and compounds having a solubility parameter of 8 to 14 (cal/cm³)^{1/2} and disclosed in JP-A-H8(or 1996)-224 452.

The thickness of each of the separation active layers 4 formed on the porous substrates 3, respectively, is not particularly limited, and is usually from about 0.05 µm to 2 µm, preferably from 0.1 µm to 1 µm.

In the present embodiment, the two separation membranes 1 and the channel member 2, which are superposed on each other as described above, are used in the state of being folded a plurality of times into the form of pleats (bellows). Thus, the two separation membranes 1, and the channel member 2 each preferably have flexibility, and preferably have such a crack resistance that when the superposed members are subjected to 180°-bending three or more times, the members are not cracked.

Fig. 2 is a schematic perspective view illustrating a structural example of a separation membrane unit 10. This separation membrane unit 10 is a unit wherein feed water (feed) is filtrated to generate permeated water (permeate). The two separation membranes 1, and the channel member 2 superposed on each other in the embodiment illustrated in Fig. 1 are folded a plurality of times into the form of pleats as illustrated in Fig. 2, whereby folds 5 are formed to be arranged alternately at one side face of the two separation membranes 1, and at a side face thereof that is opposite to the one side face (the upper and the lower in Fig. 2).

In the two separation membranes 1, and the channel member 2 folded a plurality of times into the pleat form, the folds 5 are adjacent to each other to be stacked onto each other into a specified direction A. The individual folds 5 are extended to a direction B perpendicular to the stack direction A in the separation membranes 1 and the channel member 2. The adjacent folds out of the folds 5 are arranged in the stack direction A.

In this separation membrane unit 10, the cross flow filtration manner is adopted wherein feed water such as waste water or seawater is supplied to the separation membranes 1 along the direction B parallel to the separation membranes 1. The feed water is supplied from an end of the two separation membranes 1 and the channel member 2 folded a plurality of times into the pleat form, this end being an end thereof at the upstream side of the supply direction B.
The supplied feed water passes through a channel, for the feed water (supply side channel), that is made by means of the channel member 2 between the two separation membranes 1, so as to advance between the two separation membranes 1 and flow in the direction (supply direction B) parallel to the separation membranes 1. In this process, the feed water is filtrated through the separation membranes 1.
At this time, the channel member 2 functions as a supply side channel member for forming the supply side channel, and this supply side channel member makes it possible to form the supply side channel certainly. For this reason, at the folds 5 and other regions also, the feed water can be satisfactorily filtrated.

At both sides of a direction (C) perpendicular not only to the stack direction A in the two separation membranes 1 and the channel member 2 folded a plurality of times in the pleat form, but also to the supply direction B (at the upper and the lower in Fig. 2), water collecting pipes 6 are arranged, respectively, which are extended in parallel to the supply direction B, which is the feed water-supplying direction.
For the two separation membranes 1 and the channel member 2 folded a plurality of times in the pleat form, these water collecting pipes 6 are laid at the one side face thereof, and at the opposite side face, where the folds 5 are formed. Inside the pipes, respective permeate side channels 7 are made as channels for permeated water.

The permeated water, which is generated by the matter that the feed water flowing in the supply direction B between the two separation membranes 1 is filtrated through the separation membranes 1, flows to the outside of the two separation membranes 1, more specifically, flows out to the upper side and the lower side of Fig. 2 to pass through a water collecting structure not illustrated, and then the permeated water is collected into the water collecting pipes 6. The thus-collected permeated water passes through the water collecting pipes 6 to be introduced to the outside of the separation membrane unit 10.

In this example, sealing regions 8 are formed between the two separation membranes 1 and the channel member 2 folded a plurality of times in the pleat form, and the water collecting pipe 6 laid at the one side face thereof, and formed between the same folded members, and the water collecting pipe 6 at the opposite side face, respectively.
The sealing regions 8 are regions for separating the feed water passing between the two separation membranes 1 from the permeated water generated outside the two separation membranes 1, and only the permeated water passes through the sealing regions 8 to be introduced into the water collecting pipes 6, This water collecting mechanism may be formed in the sealing regions 8, or may be formed separately from the sealing regions 8.

In the embodiment, the two separation membranes 1, in each of which one of the separation active layers 4 is formed on one of the two surfaces of one of the sheet-form porous substrates 3, are superposed over each other to cause the separation active layers 4 to face each other.
Thus, the separation active layers 4 are not exposed to the one side face, nor the opposite side face (to the upper nor the lower in Fig. 2), the folds being formed in the two sides, and not exposed to any other region. Thus, according to this simple structure, the separation active layers 4 can be prevented from being damaged.

Moreover, the two separation membranes 1, which are superposed over each other to cause the separation active layers 4 to face each other, have a symmetric structure. Although the two separation membranes 1 are in the state of being folded a plurality of times into the pleat form as illustrated in Fig. 2, the folded membranes have this symmetric structure.
Accordingly, as compared with an asymmetric structure wherein a single separation membrane 1 having a surface on which a separation active layer 4 is formed is folded a plurality of times into the form of pleats, a bias current is less caused so that the feed water can be more satisfactorily filtrated in the cross flow filtration manner.

Additionally, the permeated water generated by filtrating the feed water through the two separation membranes 1 can be efficiently transported through the water collecting pipes 6 laid at the one side face of the two separation membranes 1 and at the opposite side face (at the upper and the lower in Fig. 2), respectively.
In the case of arranging, for the two separation membranes 1 that are folded particularly to give a symmetric structure, the water collecting pipes 6 at the one side face thereof and the opposite side face symmetrically, the separation membrane unit 10 has a symmetric structure as a whole. As a result, the feed water can be more stably filtrated.

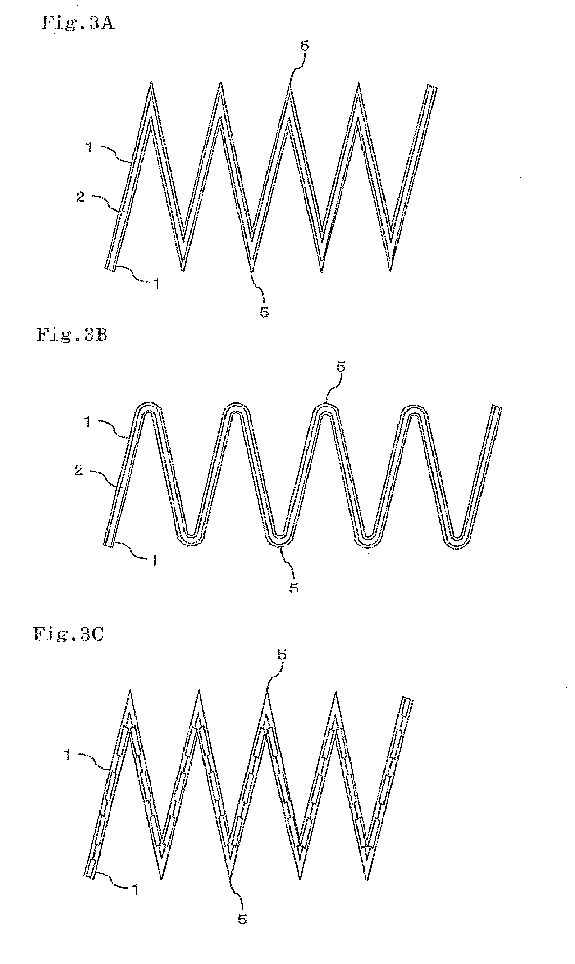

Figs. 3A to 3C are each a schematic sectional view illustrating an embodiment wherein the separation membranes 1 are folded. Fig. 3A illustrates an example of the state of the two separation membranes 1 and the channel member 2 superposed on each other in the middle of being folded a plurality of times into the pleat form. The folds 5 are each bent into a V-shaped form to cause the fold 5 to have an acute angle.
Similarly to Fig. 3A, Fig. 3B illustrates an example of the state of the two separation membranes 1 and the channel member 2 superposed on each other in the middle of being folded a plurality of times into the pleat form; however, the folds 5 each have a shape curved to a U-shaped form.

In the above-mentioned embodiment, the description has been made about the structure wherein the channel member 2 is sandwiched between the two separation membranes 1. However, the channel member 2 may be omitted as far as a channel for the feed water can be certainly gained between the two separation membranes 1.
As attained in an example illustrated in, for example, Fig. 3C, each of the separation active layers 4 in the two separation membranes 1 is rendered not any flat plane but a plane having convex and concave portions. Under this situation, the two separation membranes 1 are superposed over each other to bring the separation active layers 4 into contact with each other.
In this case, the respective convexes of the separation active layers 4 contact each other so that a channel for feed water can be made between the respective concave portions. The shape of the convex portions may be rendered various shapes, such as a lozenge, a parallelogram, an ellipse, an oval, a circle, a square or a triangle, as far as the shape is a shape making it possible to gain the feed water-channel certainly.
In the example in Fig. 3C, the folds 5 of the separation membranes 1 are each bent into a V-shaped form. However, the shape of the folds 5 is not limited to such a shape. Thus, for example, the folds 5 may each be curved into a U-shaped form, or some other form.

Figs. 3A to 3C are each a view illustrating a mere example of the embodiment wherein the separation membranes 1 are folded. The separation membranes 1 may be made into various other forms as far as the forms are each a form that the two separation membranes 1 are folded a plurality of times. Examples of the method for folding the two separation membranes 1 are a method of folding the two separation membranes 1 in the state of being superposed over each other, and a method of folding each of the separation membranes 1, and subsequently superposing the membranes over each other.
In any one of these methods, for example, a guillotine blade or some other member is pushed onto either one of the separation membranes 1, or each of the members 1, and then the separation membranes 1, or the membrane 1 is folded at the region onto the member is pushed, thereby forming each of the folds 5 that has a shape corresponding to the member. It is conceived that another example of the method is a method of using a pinch roller or pinch bar to fold the separation membranes 1.

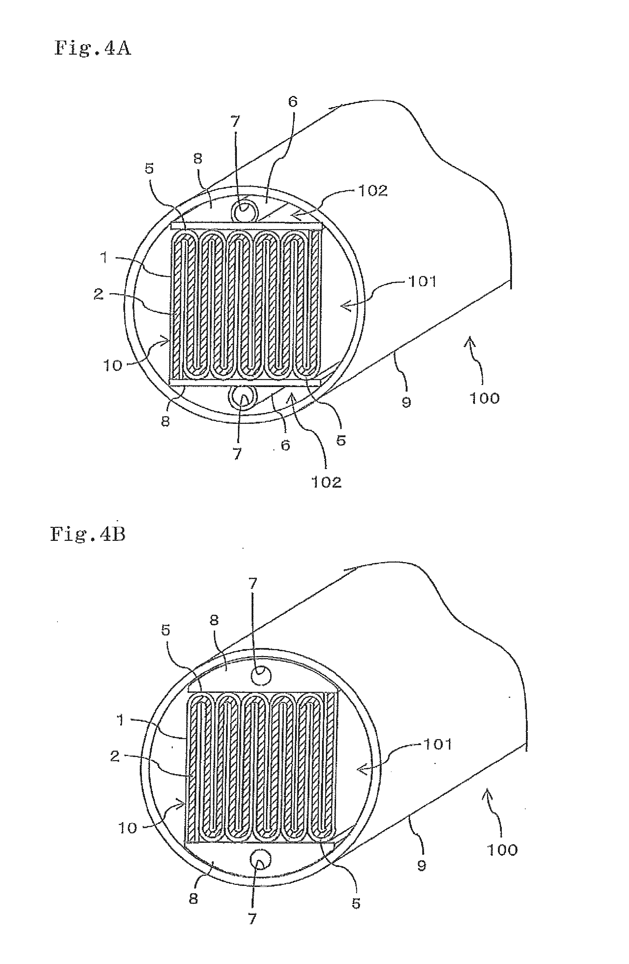

Figs. 4A to 4C are each a schematic perspective view illustrating a structural example of a separation membrane element 100. Each separation membrane unit 10 therein may be used in the state that the outside thereof is optionally covered with an exterior member 9 or some other, or end members (not illustrated) are arranged at respective axial-direction end regions of the unit.
In each of the examples, the separation membrane unit 10 is laid inside the exterior member 9 which is a cylindrical exterior member, thereby forming the separation membrane element 100.

Fig. 4A illustrates one example of the separation membrane element 100 wherein the separation membrane unit 10 in Fig. 2 is laid inside the exterior member 9. The two separation membranes 1 and the channel member 2 folded a plurality of times into the pleat form have a rectangular section; thus, it is preferred to use the exterior member 9 which is a member having a somewhat larger inside diameter than the length of the diagonal lines of the rectangle.

In this example, the sealing regions 8 are laid at the one side face of the two separation membranes 1 and the channel member 2 folded a plurality of times into the pleat form and at the opposite side face, respectively, (the upper and the lower in Fig. 4A), whereby between the sealing regions 8, spaces 101 are made in which feed water is circulated, and further whereby between each of the sealing regions 8 and a sealing-region-opposed area of the internal circumferential surface of the exterior member 9, a space 102 is made in which permeated water is circulated.
In order to separate the spaces 101 from the spaces 102 water-tightly, it is preferred that the edges of each of the sealing regions 8 adhere closely to the internal circumferential surface of the exterior member 9. For this purpose, a sealing member may be fitted to each of the edges of each of the sealing regions 8.

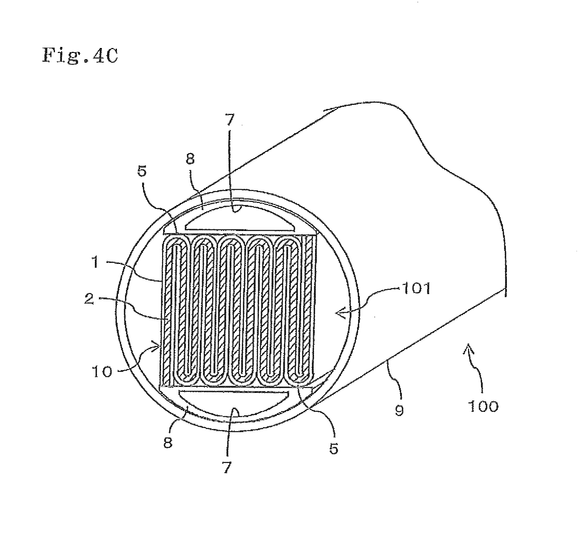

In each of the examples in Figs. 4B and 4C, the spaces 102 are, except the permeate side channels 7 therein, are filled with sealing regions 8, respectively. Thus, the outer circumferential surfaces of the sealing regions 8 each have a shape corresponding to the internal circumferential surface of the exterior member 9.
As illustrated in each of Figs. 4B and 4C, this structure makes it possible to make each of the permeate side channels 7 to have a sectional area selected at will in accordance with the shape of the hole made inside each of the sealing regions 8.

As illustrated in each of Figs. 4A to 4C, in a case where the separation membrane unit 10 is held inside the exterior member 9, the cross section of which is cylindrical, or in other similar cases, the permeate side channel 7 can be made in the space (space 102) which is formed at each of the one side face of the two separation membranes 1, and the opposite side face (at each of the upper and the lower in each of Figs. 4A to 4C) and which is positioned between each of these sides and the internal circumferential surface of the exterior member 9.
For this reason, spaces where the two separation membranes 1 are to be set can be certainly kept at a maximum level. Thus, the feed water can be more efficiently filtrated.

However, the exterior member 9 is not limited to any member having a circular cross section, and may be an exterior member having a cross section of a different shape, for example, a rectangular shape. The exterior member 9 may be omitted. Even when the exterior member 9 is omitted, the two separation membranes 1 are superposed over each other in the present embodiment to cause the separation active layers 4 to face each other, so that the separation active layers 4 are not naked. As a result, there is no risk that the separation active layers 4 are damaged.

In the above-mentioned embodiments, the description has been made about the cases where the feed is feed water. However, the feed may be not any feed water but any other raw liquid such as raw oil. The feed may be a gas or some other.

### LIST OF REFERENCE SIGNS

- 1: separation membranes
- 2: channel member
- 3: porous substrates
- 4: separation active layers
- 5: folds
- 6: water collecting pipes
- 7: permeate side channels
- 8: sealing regions
- 9: exterior member
- 10: separation membrane unit
- 100: separation membrane element
- 101: spaces
- 102: spaces

## Claims

1. A separation membrane unit for filtrating a feed to generate a permeate, comprising two separation membranes each having a separation active layer formed on one surface of a porous substrate in a sheet form, the two separation membranes being superposed over each other while the separation active layers face each other,
wherein the two separation membranes are folded plural times into the form of pleats, whereby folds are formed alternately at one side face and an opposite side face.

2. The separation membrane unit according to claim 1,
wherein between the two separation membranes a supply side channel is made as a channel for supplying the feed.

3. The separation membrane unit according to claim 2,
comprising a supply side channel member for making the supply side channel, the supply side channel member being arranged between the two separation membranes.

4. The separation membrane unit according to claim 1,
wherein a permeate side channel is made as a channel for the permeate at each of the one side face and the opposite side face of the two separation membranes.

5. The separation membrane unit according to claim 1,
wherein the separation active layer comprises a polyamide type resin.

6. A separation membrane element, comprising the separation membrane unit recited in any one of claims 1 to 5, and
an exterior member that covers an outside of the separation membrane unit.
